# EUROPEAN PATENT APPLICATION

(11) **EP 3 895 548 A1**
(43) Date of publication of application: **20.10.2021**
(21) Application number: 20822854.4
(22) Date of filing: 22.05.2020
(51) Int. Cl.: A23L 27/30, A23L 2/60, A23L 29/00

(54) **SWEETENER COMPOSITION AND METHOD FOR PREPARING SAME**

(30) Priority: 14.06.2019 KR 20190070876
(71) Applicant: CJ CheilJedang Corporation, Seoul 04560 (KR)
(72) Inventor: KIM, Jung Eun, Sowon-si, Gyeonggi-do 16495 (KR); CHU, Sun, Sowon-si, Gyeonggi-do 16495 (KR); PARK, Sung Hee, Sowon-si, Gyeonggi-do 16495 (KR); KIM, Seong Bo, Sowon-si, Gyeonggi-do 16495 (KR); CHOI, Eun Jung, Sowon-si, Gyeonggi-do 16495 (KR)
(74) Representative: Mummery, Thomas Zack
(86) International application number: PCT/KR2020/006678
(87) International publication number: WO 2020/251185

(57) **Abstract**

The present invention relates to a sweetening material composition and a method for preparing the same. Specifically, the present invention relates to a sweetening material composition including transglycosylation steviol glycosides and a method for preparing the same. The sweetening material composition of the present invention includes transglycosylated stevia and saccharides, and the saccharides include 5 to 90 parts by weight of an oligosaccharide having a degree of polymerization (DP) of 3 or more with respect to 100 parts by weight.

## Description

### TECHNICAL FIELD

The present invention relates to a sweetening material composition and a method for preparing the same. Specifically, the present invention relates to a sweetening material composition including a transglycosylation steviol glycoside and a method for preparing the same.

### BACKGROUND ART

Sugar (sucrose) is the most commonly known and widely used sweetening material, and is used in a large amount for coffee drinks such as instant coffee and for soft drinks such as juices and sodas. Although the social trends pursuing well-being has brought about a growing tendency to reduce sugar that causes adult diseases such as obesity and diabetes, and cavities, or to use high-intensity sweetening materials that can replace sugar, the use of artificial sweetening materials such as saccharin and aspartame are increasingly being regulated due to hazards such as toxicity and allergies, and stability issues. Accordingly, there is a demand for a new functional transglycosylation sugar material.

Steviol glycosides or steviosides are sweet sweetening materials included in the leaves of stevia, and are known to have heat resistance, acid resistance, alkali resistance, and no fermentation. Global consumption of stevia sweetening materials is reported to be about 30% in Korea, 27% in Japan, 30% in China, and the remaining 13% in other countries, and in particular, in Korea, the stevia sweetening material as a food is consumed in the form of a product that improves sweetness by adding glucose to steviol glycosides using enzymes, that is, an enzyme-treated stevia product that accounts for more than 80% of the total consumption. Among the steviol glycoside sweetening materials, the enzyme-treated stevia has advantages of having sweetness close to sugar, no bitter taste, and sweetness 100 to 250 times higher than that of sugar, but virtually zero calorie. In addition, the enzyme-treated stevia has an advantage of being stable in heat and acid, and thus has little change in sweetness during processing and preservation. Further, the enzyme-treated stevia hardly becomes a nutrient source of microorganisms, is practically non-carious in the oral cavity, does not cause the Maillard reaction, hardly browns through food processing, relieves acidity, and has a small freezing point. Moreover, the enzyme-treated stevia does not increase osmotic pressure, and has a synergy effect with other sweetening materials, thereby reducing cost for sweetening. However, in spite of the advantages described above and improvements in sweetness through a refining process and an enzyme reaction in the stevia leaf extract, the enzyme-treated stevia has a slow increase in sweetness compared to other sweetening materials (sugar, fructose, etc.), and the aftertaste sweetness remains relatively long, causing an undesired sweetness finish.

Among stevia sweetness components, rebaudioside A has the sweetness quality close to sugar and a high sweetness level. Rebaudioside A has recently been used as a sweetening material in Coca-Cola and Pepsi as it has been approved for use as food by the FDA. The content of rebaudioside A in stevia extract is about 30%, and the steviol glycosides account for about 50% (Korea Patent Publication No. 2001-0111560). As a result, there is a growing demand for products containing high concentrations of rebaudioside A having an excellent sweetness, but when high concentrations of rebaudioside A is solely separated, steviol glycosides are inevitably generated as a byproduct and as the demand for rebaudioside A increases, the issue of treating steviol glycosides having less sweetness quality than rebaudioside A has emerged as a challenge for commercialization.

Accordingly, the inventors of the present invention have completed the present invention after repeatedly conducting extensive studies to improve sweetness quality while using the enzyme-treated stevia produced from steviol glycosides.

### DISCLOSURE

### TECHNICAL PROBLEM

An aspect of the present invention provides a sweetening material composition having an excellent sweetness and a method for preparing the same.

Another aspect of the present invention provides a sweetening material composition having an excellent sweetness while reducing calories.

Another aspect of the present invention provides a sweetening material composition having functionality such as promoting growth of bifidobacteria by using oligosaccharides, improving intestinal function, and improving immunity.

### TECHNICAL SOLUTION

According to an aspect of the present invention, there is provided a sweetening material composition including transglycosylated stevia and saccharides, wherein the saccharides include 5 to 90 parts by weight of an oligosaccharide having a degree of polymerization (DP) of 3 or more with respect to 100 parts by weight.

According to another aspect of the present invention, there is provided a composition for preparing a sweetening material including disaccharides containing glucose, steviol glycosides and *Lactobacillus mali* or glycosyltransferases derived therefrom.

According to another aspect of the present invention, there is provided a sweetening material composition including contacting a mixture of disaccharides containing glucose and steviol glycosides with lactobacilli mali or a glycosyltransferase derived therefrom to prepare transglycosylated stevia and saccharides, wherein the saccharides include an oligosaccharide having a degree of polymerization (DP) of 3 or more.

### ADVANTAGEOUS EFFECTS

A sweetening material composition of the present invention is capable of providing an excellent sweetness and lower calories than sugar having the same sweetness.

In addition, the usea composition for preparing a sweetening material of the present invention may provide a sweetening material composition having functionality such as promoting growth of bifidobacteria, improving intestinal function, and improving immunity.

### BRIEF DESCRIPTION OF THE DRAWINGS

FIG. 1 is a graph showing HPLC results of steviol glycosides used as a raw material before an enzyme reaction;
FIG. 2 is a graph showing HPLC results of a product produced after an enzyme reaction from the raw material; and
FIG. 3 is a graph showing sensory evaluation results of a sweetening material composition prepared according to the present invention.

### MODE FOR CARRYING OUT THE INVENTION

An aspect of the present invention provides a sweetening material composition including a transglycosylated stevia and saccharides, wherein the saccharides include 5 to 90 parts by weight of an oligosaccharide having a degree of polymerization (DP) of 3 or more with respect to 100 parts by weight.

The oligosaccharide may include, for example, a compound represented by Formula 1 below, and specifically, may have a branched oligosaccharide such as isomaltose, panose, and isomaltotriose as a main component. In the present invention, the oligosaccharide may be produced by an enzyme reaction from disaccharides containing glucose. The oligosaccharide may be formed of a monosaccharide having one or more α-1,6 bonds, or saccharides having a degree of polymerization (DP) of 1 to 9, as a main component, in addition to a linear bonded saccharide in which glucose is linked by α-1,4 bond. 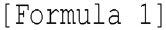 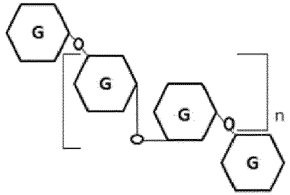 (wherein in Formula 1, n is an integer of 1 to 9.)

The oligosaccharide has a soft sweetness, for example, represents a 50% sweetness of sucrose sweetness, has high moisturizing properties, has good moisture effect in various foods, and has a great effect in anti-aging of starch, to be used throughout the food industry as a moisturizer, a brightener, an excipient, and a functional ingredient, etc. In addition, the oligosaccharide is capable of activating the fermentation of lactic acid bacteria or proliferating bifidobacterium in the intestines, and may also be effective in intestinal regulation function, prevention of tooth decay, anti-aging and diet. Accordingly, the sweetening material composition including the oligosaccharide of the present invention may be used in a variety of processed food fields such as dairy products, fermented milk, and beverages.

To be specific, the sweetening material composition according to the present invention may include, with respect to 100 parts by weight of the total saccharide, 5 parts by weight or more, 10 parts by weight or more, 15 parts by weight or more, 20 parts by weight or more, 25 parts by weight or more, 30 parts by weight or more, 35 parts by weight or more, 40 parts by weight or more, 45 parts by weight or more, 50 parts by weight or more, 55 parts by weight or more, 60 parts by weight or more, 65 parts by weight or more, 70 parts by weight or more, and/or 90 parts by weight or less, 85 parts by weight or less, and 80 parts by weight or less of an oligosaccharide having a DP of 3 or more. The inclusion of the oligosaccharide having a degree of polymerization of 3 or more in the above amount gives an advantage of having an excellent consumer preference.

In one aspect, the sweetening material composition may include saccharides in an amount of 10 to 60% by weight with respect to the total weight. For example, the saccharides may be included in an amount of 15 to 55% by weight, 20 to 50% by weight, 25 to 45% by weight, 25 to 40% by weight, 25 to 35% by weight, or 25 to 30% by weight.

In the present invention, the transglycosylated stevia and oligosaccharides may be a product from an enzyme reaction of a mixture of disaccharides containing glucose and steviol glycosides, and specifically, the enzyme reaction may be performed by contacting a mixture of the disaccharides containing glucose and steviol glycosides with *Lactobacillus mali* or a glycosyltransferase derived therefrom.

In this case, the 'disaccharides containing glucose' refer to disaccharides in which at least one of the monosaccharides constituting disaccharides is glucose. In the present invention, specifically, the disaccharides containing glucose may include at least one of sucrose and maltose.

To be more specific, the disaccharides containing glucose and steviol glycosides are not limited thereto, but in terms of the efficiency of the enzyme reaction, it may be mixed in a weight ratio of 0.1:1 to 15:1, 0.2:1 to 10:1, 0.5:1 to 5:1, 1:1 to 3:1, or 1:1.

In one aspect of the present invention, in the above-described weight ratio range of the disaccharides containing glucose to the steviol glycoside, when the content of the disaccharides containing glucose becomes greater, the oligosaccharide production rate of the high polymerization degree may increase.

More specifically, the disaccharides containing glucose may include sucrose and maltose, and may include the sucrose and maltose in a mixed weight ratio of 1:20 to 20:1, specifically 1:15 to 15:1, 1:10 to 10:1, 2:8 to 8:2, 3:7 to 7:3, 4:6 to 6:4, or 5:5.

In an embodiment, a sweetening material composition including transglycosylated stevia and oligosaccharides was obtained from a mixture containing the sucrose:maltose:steviol glycosides in a mixed weight ratio of 10-20:5-20:1, specifically 12:7:1.

The steviol glycosides may include stevioside and rebaudioside A.

The stevioside may be included in an amount of 30 to 70% by weight, for example, 35 to 70% by weight, 35 to 67% by weight, 35 to 65% by weight, 37 to 70% by weight, 37 to 67% by weight, 37 to 65% by weight, or 37 to 43% by weight, with respect to the total weight of the steviol glycosides.

The rebaudioside A may be included in an amount of 30 to 70% by weight, for example, 35 to 70% by weight, 35 to 67% by weight, 35 to 65% by weight, 37 to 70% by weight, 37 to 67% by weight, 37 to 65% by weight, or 37 to 43% by weight, with respect to the total weight of the steviol glycosides.

The steviol glycosides may further include any one or more from the group consisting of rebaudioside C, rebaudioside D, rebaudioside F, dulcoside, and rubusoside.

The transglycosylated stevia may comprise the one formed from at least one glucose added to the OH linked at position of carbon 19 in the steviol glycosides. Specifically, the glucose may be added through a condensation reaction between the glucose transferred from disaccharides containing glucose, and hydroxy group(-OH) linked at the position of carbon 19 in the steviol glycosides.

The sweetening material may further include disaccharides having a degree of polymerization of 2 or less of at least one of glucose, fructose, and sucrose.

In one aspect, the sweetening material composition according to the present invention may include glucose in an amount of 10% by weight or less with respect to the total weight. For example, glucose may be included in an amount of 10% by weight or less, 9% by weight or less, 8% by weight or less, 7% by weight or less, 6% by weight or less, 5% by weight or less, 4% by weight or less, 3% by weight or less, 2% by weight or less, 1% by weight or less, or 0% by weight (that is, not included at all) with respect to the total weight of the sweetening material composition of the present invention. The inclusion of glucose in the above amount may further lower the calories of the sweetening material composition.

In one aspect, the sweetening material composition according to the present invention may include fructose in an amount of 10% by weight or less with respect to the total weight. For example, fructose may be included in an amount of 10% by weight or less, 9% by weight or less, 8% by weight or less, 7% by weight or less, 6% by weight or less, 5% by weight or less, 4% by weight or less, 3% by weight or less, 2% by weight or less, 1% by weight or less, or 0% by weight (that is, not included at all) with respect to the total weight of the sweetening material composition of the present invention. The inclusion of fructose in the above amount may further lower the calories of the sweetening material composition.

In one aspect, the sweetening material composition according to the present invention may include sucrose in an amount of 10% by weight or less with respect to the total weight. For example, sucrose may be included in an amount of 10% by weight or less, 9% by weight or less, 8% by weight or less, 7% by weight or less, 6% by weight or less, 5% by weight or less, 4% by weight or less, 3% by weight or less, 2% by weight or less, 1% by weight or less, or 0% by weight (that is, not included at all) with respect to the total weight of the sweetening material composition of the present invention. The inclusion of sucrose in the above amount may further lower the calories of the sweetening material composition.

Another aspect of the present invention provides a composition for preparing a sweetening material including disaccharides containing glucose, steviol glycosides, and *Lactobacillus mali* or a glycosyltransferase derived therefrom.

Disaccharides containing glucose, steviol glycosides, *Lactobacillus mali,* and a glycosyltransferase are the same as described above in the sweetening material composition.

Another aspect of the present invention provides a method for preparing a sweetening material composition, including contacting a mixture of disaccharides containing glucose and steviol glycosides with *Lactobacilli mali* or a glycosyltransferase derived therefrom to prepare transglycosylated stevia and saccharides, and the saccharides include an oligosaccharide having a degree of polymerization (DP) of 3 or more.

Disaccharides containing glucose, steviol glycosides, *Lactobacillus mali,* and a glycosyltransferase are the same as described above in the sweetening material composition.

The enzyme reaction may be performed by contacting a mixture of disaccharides containing glucose and steviol glycosides with *Lactobacillus mali* or a glycosyltransferase derived therefrom. The enzyme reaction, for example, may be performed at an enzyme activation temperature, such as 30 to 50 °C or 35 to 45 °C by adding *Lactobacillus mali* or a glycosyltransferase derived therefrom to the disaccharides containing glucose and steviol glycosides.

The enzyme reaction may be performed for a suitable time, for example, 10 to 30 hours or 15 to 20 hours.

The enzyme reaction may be performed at pH 4 to 6, such as pH 5 to 5.5.

In the present specification, the 'enzyme' refers to a protein catalyst that mediates a chemical reaction by binding to a specific substrate to form an enzyme-substrate complex and lowering the activation energy of the reaction. According to the present invention, the enzyme may include a glycosyltransferase.

In the present invention, the enzyme reaction may be using *Lactobacillus mali* or a glycosyltransferase derived therefrom.

In one aspect, the *Lactobacillus mali* may use *Lactobacillus mali* DSM20444 strain.

In one aspect, the glycosyltransferase derived from the *Lactobacillus mali* may include the sequence represented by SEQ ID NO: 1.

The *Lactobacillus mali* or a glycosyltransferase derived therefrom may be used to exhibit excellent transglycosylation rates.

Specifically, the disaccharides containing glucose may include at least one of sucrose and maltose, and more specifically, the disaccharides containing glucose may include the sucrose and maltose in a mixed weight ratio of 1:20 to 20:1, specifically in a mixed weight ratio of 1:15 to 15:1, 1:10 to 10:1, 2:8 to 9:2, 3:7 to 7:3, 4:6 to 6:4, or 5:5.

More specifically, the disaccharides containing the glucose and steviol glycosides are not limited thereto, but in terms of the efficiency of the enzyme reaction, may be mixed in a weight ratio of 0.1:1 to 15:1, 0.2:1 to 10:1, 0.5:1 to 5:1, 1:1 to 3:1, or 1:1.

The steviol glycosides may include stevioside and rebaudioside A.

The stevioside may be included in an amount of 30 to 70% by weight, such as 35 to 70% by weight, 35 to 67% by weight, 35 to 65% by weight, 37 to 70% by weight, 37 to 67% by weight, 37 to 65% by weight, or 37 to 43% by weight with respect to the total weight of the steviol glycosides.

The steviol glycosides may include rebaudioside, specifically rebaudioside A, and in the present invention, the steviol glycosides may include the rebaudioside A in an amount of 30 to 70% by weight, such as 35 to 70% by weight, 35 to 67% by weight, 35 to 65% by weight, 37 to 70% by weight, 37 to 67% by weight, 37 to 65% by weight, or 37 to 43% by weight. The use of the steviol glycosides containing the rebaudioside A in the above amount may further improve the degree of sweetness improvement after the enzyme reaction.

A method for preparing a sweetening material composition of the present invention may further include obtaining a product produced after the enzyme reaction.

The obtaining of the produced product may be performed by a method known in the art, and the method is not particularly limited. For example, the method may include salting out, recrystallization, organic solvent extraction, esterification distillation, chromatography, and electrodialysis.

The sweetening material composition prepared by the method for preparing the sweetening material composition according to the present invention is as described above.

Hereinafter, the present invention will be described in more detail with reference to examples to allow for a clearer understanding of the present invention. The invention may, however, be embodied in many different forms and should not be construed as being limited to the examples set forth herein. Rather, these examples are provided so that this description will be thorough and complete, and will fully convey the scope of the present invention to those skilled in the art.

### Example 1. Preparation of Sweetening material Composition

8% (w/v) of steviol glycosides (Jining Aoxing Stevia Products Co. Ltd, 93% by weight of steviol glycoside (41.82% by weight of stevioside, 39.94% by weight of rebaudioside A, 6.43% by weight of rebaudioside C, 1.64% by weight of rebaudioside D, 1.32% by weight of rebaudioside F, 1.24% by weight of dulcoside, 0.61% by weight of rubusoside)) containing approximately 40% by weight of rebaudioside A and stevioside, respectively and 8% (w/v) of sucrose (white sugar, CJ CheilJedang) were mixed at 50mM sodium acetate buffer pH5, and a glycosyltransferase (final 0.3 U/ml) derived from *Lactobacillus mali* DSM20444 of SEQ ID NO: 1 was added to perform an enzyme reaction at 40 °C for 24 hours to prepare a sweetening material composition.

The glycosyltransferase of SEQ ID NO: 1 was obtained using a recombinant strain by a known method.

Specifically, the recombinant strain was produced by a gene synthesis method (Bionia Co., Ltd.), and the obtained gene was inserted into the pBT7-N-His vector and transformed into E. coli BL21(DE3). The transformed E. coli was plated on a plate medium containing ampicillin to obtain a recombinant strain (microorganism).

Meanwhile, the microorganism was deposited as deposit number KCCM12561P to the Korean Culture Center of Microorganisms, which is an international depository authority under the Budapest Treaty, as of June 11, 2019.

For the expression and purification of the glycosyltransferase from the recombinant strain, the recombinant E. coli strain was seeded in 5 ml of ampicillin-containing LB medium and cultured at 37 °C until absorbance reached 2.0 at 600 nm. The culture solution of seed culture was added to 500 ml of ampicillin-containing LB medium to perform the culture. Also, when the absorbance became 0.4 at 600 nm, 0.1 mM IPTG (isopropyl β-D-thiogalactopiopyranoside) was added to induce mass expression of the enzyme. The stirring speed during the process was maintained at 180 rpm, the culture temperature was maintained at 37 °C, and after adding IPTG, the stirring speed was 120 rpm, and the culture temperature was 16 °C. The culture solution of the strain was centrifuged at 4 °C for 20 minutes at 10000 × g, and 50 mM of tris hydrochloric acid buffer solution was added to crush the cell solution, using an ultrasonic sonicator. The cell debris was again centrifuged at 4 °C for 20 minutes at 13,000 × g to separate only a cell supernatant as an enzyme solution.

### Experimental Example 1. Component Analysis of Sweetening material Composition

### [Analysis of Oligosaccharide Component]

The oligosaccharide content was quantified through high performance liquid chromatography (HPLC) analysis under the analysis conditions of Table 1 below, and the results are shown in Table 2.

**[Table 1]**

| | |
|---|---|
| Mobile phase | Acetonitrile (68 vol%): DW (32 vol%) |
| Column | 250 × 4.6 mm Kromasil 100-10NH2 (Kromasil) |
| Flow rate | 0.8 ml/min |
| Temperature | 35 °C |
| Dose | 20 µl |
| Detector | RID |

**[Table 2]**

| Type of saccharide | | (%, w/v) |
|---|---|---|
| oligosaccharide | Isomaltotriose (DP3) | 13.36 |
| | Isomaltotetraose (DP4) | 0 |
| | Isomaltopentaose (DP5) | 8.02 |
| Other saccharides | Fructose | 6.89 |
| | Glucose | 0 |
| | Sucrose | 0 |

### [Analysis of Transglycosylation Rate]

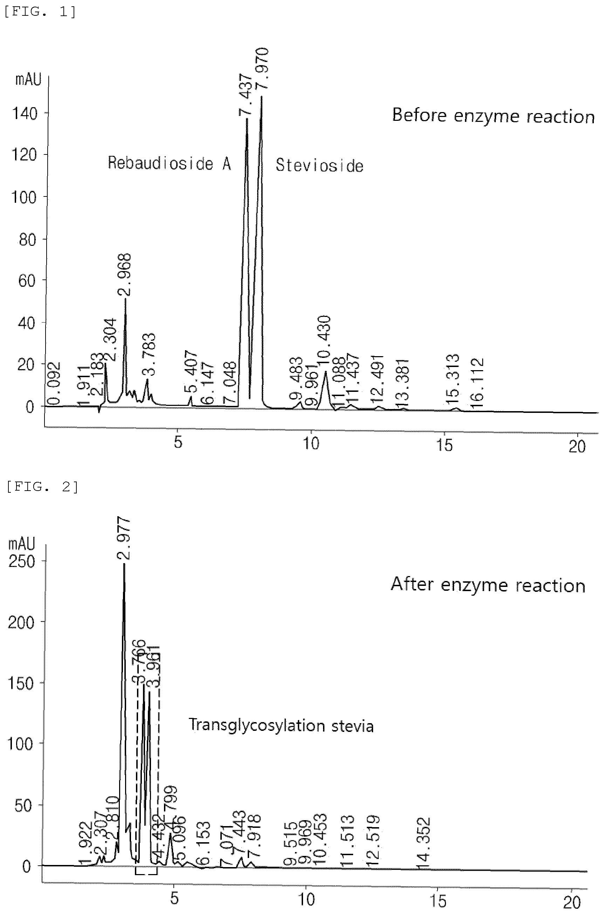

In the analysis conditions of Table 3, the transglycosylation rate was confirmed through the analysis results of components before and after the enzyme reaction through HPLC analysis, and the results are shown in FIGS. 1 and 2.

**[Table 3]**

| | |
|---|---|
| Mobile phase | Acetonitrile (30 vol%): DW (70 vol%) |
| Column | 250 × 4.6 mm Capcell pak C18 MG II (Shiseido) |
| Flow rate | 1 ml/min |
| Temperature | 40 °C |
| Dose | 20 µl |
| Detector | DAD(210nm) |

Raw material (RebA 40%, Jining Aoxing Stevia Products Co. Ltd) was analyzed that rebaudioside A was the main component. After the enzyme reaction, the conversion rate of 91.71% was confirmed with respect to the reduction of the raw material.

### [Examination of Transglycosylation Product Structure]

As a result of analyzing transglycosylation binding structure for the main components of stevioside and rebaudioside through NMR, the transglycosylation stevioside was confirmed to be a new compound, 13-[(2-O-β-D-glucopyranosyl-P-D-glucopyranosyl)oxy]ent-kaur-16-en-19-oic acid 6-O-α-D-glucopyranosyl-β-D-glucopyranosyl ester, and the transglycosylation rebaudioside A was confirmed to be a new compound, 13-[(2-O-β-D-glucopyranosyl-3-O-β-D-glucopyranosyl-β-D-glucopyranosyl)oxy]ent-kaur-16-en-19-oic acid 6-O-α-D-glucopyranose-β-D-glucopyranosyl ester.

Formula 2 represents the chemical structure of transglycosylation stevioside, Formula 3 represents the chemical structure of transglycosylation rebaudioside A.

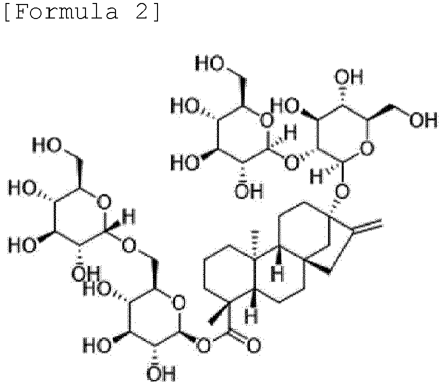

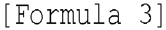

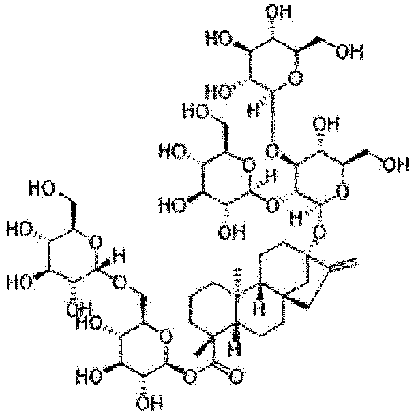

### Experimental Example 2: Sensory Evaluation

### [Sensory Description Analysis]

After the enzyme reaction prepared in Example 1 above, 2% of a sample (a mixture of transglycosylated stevia and oligosaccharide, other saccharides) was prepared, and description analysis was conducted for comparative evaluation with raw materials (a mixture of sucrose 1%(w/w) and Reb A 40 1% (w/w)).

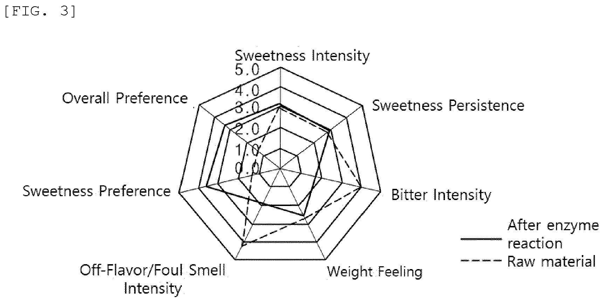

After the enzyme reaction, the comparison results of the sample (a mixture of transglycosylated stevia and oligosaccharide, other saccharides) with the raw material (a mixture of sucrose 1%(w/w) and Reb A 40 1%(w/w)) are shown in Table 4 and FIG. 3.

**[Table 4]**

| | Raw material | after enzyme reaction | p-value |
|---|---|---|---|
| Sweetness intensity | 3 | 3.19 | 0.465 |
| Sweetness persistence | 2.85 | 3.04 | 0.635 |
| Bitter intensity | 3.96 | 1.81 | 0.0001 |
| Weight feeling | 2.70 | 2.52 | 0.454 |
| off-flavor/foul smell | 4.19 | 1.93 | 0.0001 |
| intensity | | | |
| Sweetness preference | 1.48 | 3.67 | 0.0001 |
| Overall preference | 1.41 | 3.44 | 0.0001 |
| * Evaluation was performed by scoring a scale of 1 (very low) to 5 (very high) | | | |

[Sensory Preference Evaluation] After the enzyme reaction as in Example 1 above, 2% of a sample (a mixture of transglycosylated stevia and oligosaccharide, other saccharides) was prepared, and sensory comparison evaluation was conducted with a raw material (a mixture of sucrose 1%(w/w) and Reb A 40 1%(w/w)).

For 15 people, the sweetness and overall preference for the two samples were conducted using a 9-point scale (1 = very disliked, 5 = not liked or disliked, 9 = very liked).

Thereafter, statistical analysis was performed to verify a significant difference by converting to a 5-point scale through a paired T test (95% confidence level).

**[Table 5]**

| Sensory properties | Raw material | After enzyme reaction | P-value |
|---|---|---|---|
| Sweetness preference | 1.52 | 3.77 | 0.00001 |
| Overall preference | 1.67 | 3.85 | 0.0001 |

As confirmed in Table 5, the sweetness preference and overall preference of the sweetening material composition prepared after the enzyme reaction were superior to those of the raw material.

### [Accession number]

Depository name: Korean Culture Center of Microorganisms (Overseas)
Accession number: KCCM12561P
Date of Deposit: 20190611

## Claims

1. A sweetening material composition comprising:
transglycosylated stevia and saccharides,
wherein the saccharides comprise 5 to 90 parts by weight of an oligosaccharide having a degree of polymerization (DP) of 3 or more with respect to 100 parts by weight.

2. The sweetening material composition of claim 1, wherein the saccharides are contained in an amount of 10 to 60% by weight with respect to the total weight of the sweetening material composition.

3. The sweetening material composition of claim 1, wherein the transglycosylated stevia comprises at least one glucose added to the OH linked at position of carbon 19 in steviol glycosides.

4. A composition for preparing a sweetening material comprising disaccharides containing glucose, steviol glycosides, and *Lactobacillus mali* or a glycosyltransferases derived therefrom.

5. The composition for preparing a sweetening material of claim 4, wherein the disaccharides containing glucose comprise at least one of sucrose and maltose.

6. The composition for preparing a sweetening material of claim 5, wherein the disaccharides containing glucose comprise sucrose and maltose in a mixed weight ratio of 1:20 to 20:1.

7. A method for preparing a sweetening material composition, the method comprising:
contacting a mixture of disaccharides containing glucose and steviol glycosides with *Lactobacilli mali* or a glycosyltransferase derived therefrom to prepare transglycosylated stevia and saccharides,
wherein the saccharides comprise an oligosaccharide having a degree of polymerization (DP) of 3 or more.

8. The method for preparing a sweetening material composition of claim 7, wherein the saccharides comprise 5 to 90 parts by weight of an oligosaccharide having a degree of polymerization (DP) of 3 or more with respect to 100 parts by weight.

9. The method for preparing a sweetening material composition of claim 7, wherein the disaccharides containing glucose comprise at least one of sucrose and maltose.

10. The method for preparing a sweetening material composition of claim 9, wherein the disaccharides containing glucose comprise sucrose and maltose in a mixed weight ratio of 1:20 to 20:1.

11. The method for preparing a sweetening material composition of claim 7, wherein the glycosyltransferase comprises the sequence represented by SEQ ID NO: 1.

12. The method for preparing a sweetening material composition of claim 7, wherein the steviol glycosides comprise rebaudioside A in an amount of 30 to 70% by weight with respect to the total weight.
